# EUROPEAN PATENT APPLICATION

(11) **EP 2 848 475 A1**
(43) Date of publication of application: **18.03.2015**
(21) Application number: 12876395.0
(22) Date of filing: 08.05.2012
(51) Int. Cl.: B60R 21/00, B60R 1/00, G06T 1/00, H04N 7/18

(54) **OVERHEAD VIEW IMAGE DISPLAY DEVICE**

(71) Applicant: Toyota Jidosha Kabushiki Kaisha, Toyota-shi, Aichi 471-8571 (JP)
(72) Inventor: ESAKA Toshinori, Toyota-shi Aichi 471-8571 (JP); MAEJIMA Kohei, Toyota-shi Aichi 471-8571 (JP)
(74) Representative: Albutt, Anthony John
(86) International application number: PCT/JP2012/061752
(87) International publication number: WO 2013/168230

(57) **Abstract**

An overhead view image display device 10 includes cameras 11a and 11b that are mounted in a vehicle and capture an image of a vehicle periphery, an image generation unit 21 that converts a viewpoint of the captured image of the vehicle periphery, and compresses an image region of the vehicle periphery toward the vehicle side at a preset compression ratio without using position information of a target present in the vehicle periphery, so as to generate an overhead view image; and a display 12 that displays the generated overhead view image.

## Description

### Technical Field

The present invention relates to an overhead view image display device.

### Background Art

In the related art, a display device is known which converts a viewpoint of a captured image of a vehicle periphery so as to generate and display an overhead view image which indicates circumstances of the vehicle periphery in an overhead view. Meanwhile, there is a case where, in an overhead view image, a target which is present in a space separated from a ground surface of a vehicle periphery is displayed to be present farther from a vehicle than actually present. For this reason, for example, Japanese Unexamined Patent Application Publication No. 2004-354326 discloses a technique in which an outer edge of a target is estimated by a distance measuring sensor, and the estimated outer edge is superimposed on an overhead view image and is displayed so that a distance to the target is easily recognized.

### Citation List

### Patent Literature

[Patent Literature 1] Japanese Unexamined Patent Application Publication No. 2004-354326

### Summary of Invention

### Technical Problem

However, even if the outer edge of the target is superimposed and displayed, the target is still displayed to be farther from the vehicle than actually present on the overhead view image, and this may give discomfort to a driver in relation to a distance to the target. In addition, since a distance measuring sensor or the like is required to estimate a position of a target such as an outer edge of the target, a configuration of a display device is complex.

Therefore, an object of the present invention is to provide an overhead view image display device which can display an overhead view image which allows a distance to a target to be easily recognized with a simple configuration without using a distance measuring sensor or the like.

### Solution to Problem

An overhead view image display device according to the present invention includes an imaging unit that is mounted in a vehicle and captures an image of a vehicle periphery; an image generation unit that converts a viewpoint of the captured image of the vehicle periphery, and compresses an image region of the vehicle periphery toward the vehicle side at a preset compression ratio without using position information of a target present in the vehicle periphery, so as to generate an overhead view image; and a display unit that displays the generated overhead view image.

According to the overhead view image display device of the present invention, an image region of the vehicle periphery is compressed toward the vehicle side at a preset compression ratio without using position information of a target present in the vehicle periphery, and thus an overhead view image is generated. Consequently, a positional relationship between the target present in the vehicle periphery and the vehicle is accurately displayed to an extent on the generated overhead view image. Therefore, with a simple configuration without using a distance measuring sensor or the like, it is possible to display an overhead view image which allows a distance to a target to be easily recognized.

The image generation unit may compress an image region of the vehicle periphery toward the vehicle side at a compression ratio which is preset depending on a height of a target present in a space separated from a ground surface, so as to generate the overhead view image. Consequently, it is possible to display an overhead view image which allows a distance to the target present in the space separated from the ground surface, to be easily recognized.

In addition, the overhead view image display device may further include a notification unit that performs a notification of proximity to a target present in the vehicle periphery, and the display unit may display the generated overhead view image in a case where a normal operation of the notification unit is in progress. Consequently, a notification of proximity to the target present in the vehicle periphery is performed during display of the overhead view image. Therefore, a driver can recognize a distance to the target through the notification of the proximity even if the distance to the target cannot be completely accurately displayed on the overhead view image.

The image generation unit may compress an image region of the vehicle periphery toward the vehicle side at different compression ratios depending on positions of the vehicle periphery, so as to generate the overhead view image. Consequently, circumstances of the vehicle periphery including a target present in the vehicle periphery are more accurately displayed.

### Advantageous Effects of Invention

According to the present invention, it is possible to provide an overhead view image display device which can display an overhead view image which allows a distance to a target to be easily recognized with a simple configuration without using a distance measuring sensor or the like.

### Brief Description of Drawings

Fig. 1 is a block diagram illustrating a configuration of an overhead view image display device according to an embodiment of the present invention.
Fig. 2 is a diagram for explaining a problem which occurs during display of an overhead view image.
Fig. 3 is a flowchart illustrating an operation of the overhead view image display device.
Fig. 4 is a diagram illustrating an entire display example of an overhead view image and an enlarged display example of an overhead view image.

### Description of Embodiments

Hereinafter, with reference to the accompanying drawings, an embodiment of the present invention will be described in detail. In addition, in description of the drawings, the same elements are given the same reference numerals, and repeated description will be omitted.

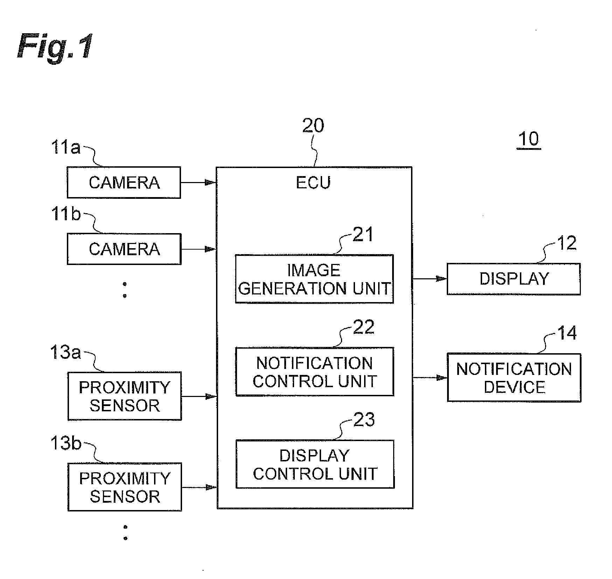

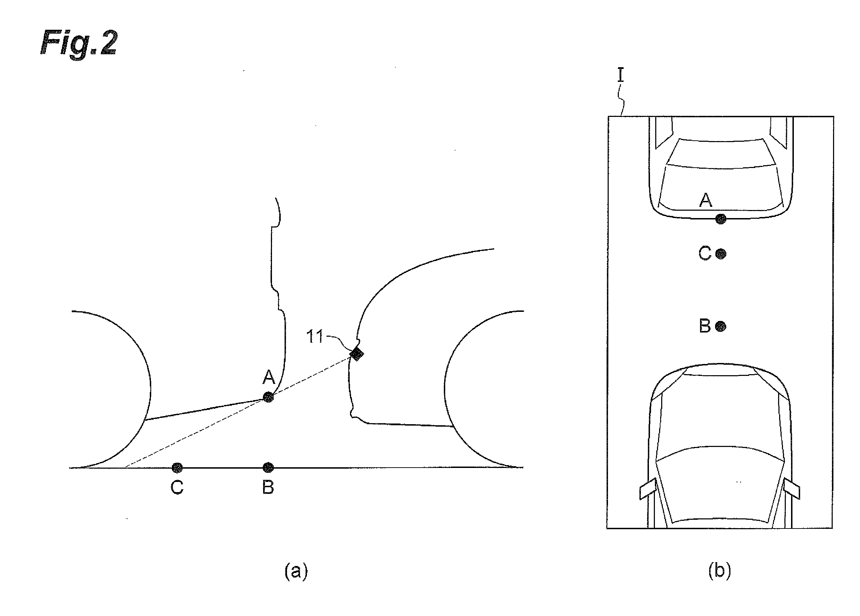

First, with reference to Figs. 1 and 2, a description will be made of a configuration of an overhead view image display device 10 according to an embodiment of the present invention. Fig. 1 is a block diagram illustrating a configuration of the overhead view image display device 10 according to the embodiment of the present invention. Fig. 2 is a diagram for explaining a problem which occurs during display of an overhead view image.

The overhead view image display device 10 is a device which is mounted in a vehicle and displays an overhead view image which allows a distance to a target present in a vehicle periphery to be easily recognized. As illustrated in Fig. 1, the overhead view image display device 10 includes cameras 11a, 11b,..., a display 12, proximity sensors 13a, 13b,..., a notification device 14, and an electronic control unit (ECU) 20. The cameras 11a, 11b, ..., the display 12, the proximity sensors 13a, 13b,..., and the notification device 14 are connected to the ECU 20.

In addition, the proximity sensors 13a, 13b,... and the notification device 14 are not essential elements for displaying an overhead view image which allows a distance to a target to be easily recognized, and are auxiliarily used to display the overhead view image and perform a notification of proximity to the target.

The cameras 11a, 11b,... are mounted in the vehicle and function as imaging units which capture images of the vehicle periphery. The cameras 11a, 11b,... are disposed on, for example, a front face, a rear face, and left and right faces of the vehicle. The cameras 11a, 11b,... supply captured images obtained by capturing images of a front side, a rear side, and left and right sides of the vehicle, to an image memory (not illustrated).

The display 12 functions as a display unit which displays a generated overhead view image. The overhead view image is an image in which a vehicle periphery including the vehicle is viewed from a virtual viewpoint over the vehicle. As the display 12, for example, a display of an in-vehicle navigation device is used, but other displays may be used. The display 12 displays an overhead view image generated by the ECU 20 as described later.

The proximity sensors 13a, 13b,... detect a target present in the vehicle periphery. For example, ultrasonic sensors are used as the proximity sensors 13a, 13b,... but other sensors for proximity detection may be used. The proximity sensors 13a, 13b,... are disposed at, for example, left and right corners of a front bumper of the vehicle and left and right corners of a rear bumper thereof. The proximity sensors 13a, 13b,... detect a target present in the vehicle periphery, for example, a target which is present at a distance of about 1 m from the proximity sensors 13a, 13b,..., and detect a distance to the present target so as to supply a detection result to the ECU 20.

The notification device 14 functions as a notification unit which performs a notification of proximity to a target present in the vehicle periphery. A speaker, an LED, or the like is used as the notification device 14, but may be used along with the display 12. If a distance to the target is below a threshold value, the notification device 14 notifies a driver of circumstances of proximity to the target and proximity (distance or the like) by using light emission, sound, vibration, and the like. The notification device 14 functions as a proximity alarming system or a clearance sonar system along with the proximity sensors 13a, 13b,....

The ECU 20 includes an image generation unit 21, a notification control unit 22, and a display control unit 23. The ECU 20 is mainly constituted by a CPU, a ROM, and a RAM, and the CPU reads a program from the ROM or the like and executes the program on the RAM so as to realize functions of the image generation unit 21, the notification control unit 22, and the display control unit 23. In addition, the functions of the image generation unit 21, the notification control unit 22, and the display control unit 23 may be realized by two or more ECUs.

The image generation unit 21 generates an overhead view image by superimposing an image of the vehicle periphery obtained by converting a viewpoint of a captured image of the vehicle periphery, on an image of the vehicle. The image generation unit 21 generates an overhead view image on the basis of a captured image read from the image memory or the like under the control of the display control unit 23, and outputs the generated overhead view image to the display 12.

The image of the vehicle periphery (an image indicating the vehicle periphery) is an image in which the vehicle periphery is viewed from a virtual viewpoint over the vehicle, and is generated by converting viewpoints of captured images of, for example, the front side, the rear side, and the left and right sides of the vehicle, and combining the captured images. The image of the vehicle (the image indicating the vehicle) is an image in which the vehicle is viewed from the virtual viewpoint over the vehicle, and is stored in advance as a picture image of the vehicle or a contour image of the vehicle. The overhead view image is generated as an image in which the vehicle periphery including the vehicle is viewed from the virtual viewpoint over the vehicle as a result of the image of the vehicle periphery being superimposed on the image of the vehicle.

The image generation unit 21 generates a normal overhead view image (which is uncompressed) or a compressed overhead view image. The normal overhead view image is an overhead view image in which a viewpoint-converted captured image of the vehicle periphery is superimposed on the image of the vehicle. On the other hand, the compressed overhead view image is an overhead view image in which a viewpoint-converted captured image of the vehicle periphery is compressed toward the vehicle side in an image region of the vehicle periphery at a preset compression ratio and is then superimposed on the image of the vehicle.

Here, for example, an address map is used to generate a normal overhead view image. In the address map, a position of each pixel on a captured image, a position of each pixel on an image of the vehicle, and a position of each pixel on a normal overhead view image are associated with each other. In addition, the normal overhead view image is generated from the captured image and the image of the vehicle on the basis of the address map.

Meanwhile, in a normal overhead view image, for example, in circumstances illustrated in Fig. 2(a), there is a case where a target which is present in a space separated from a ground surface of the vehicle periphery is displayed to be present farther from the vehicle than actually present. In the example illustrated in Fig. 2(a), a rear bumper A of a front vehicle is obliquely overviewed by a camera 11 disposed on the front face of the vehicle. In this case, in a normal overhead view image I illustrated in Fig. 2(b), the rear bumper A is displayed further in front of a position C of the ground surface than a position B located directly thereunder. Thus, there is a case where a driver cannot accurately recognize a distance to a target on the normal overhead view image, and, particularly, in a case where the normal overhead view image is enlarged to be displayed, a positional relationship between the vehicle and the target is clearly displayed, and thus a distance to the target which is close to the vehicle is easily incorrectly recognized.

For this reason, the image generation unit 21 compresses (draws) an image region of the vehicle periphery toward the vehicle side at a preset compression ratio without using position information of a target present in the vehicle periphery, so as to generate an overhead view image. In other words, the compressed overhead view image is generated without using a target detection result by detection devices such as the proximity sensors 13a, 13b,.... The compressed overhead view image is generated by uniformly compressing an image region of the vehicle periphery toward an image region side of the vehicle, for example, a center of the image region of the vehicle.

The compression ratio is preset depending on a height (a height on the ground surface) of a main target which is an object recognized by a driver, for example, a front bumper of another vehicle, a rear bumper thereof, a curbstone, or the like. The compression ratio is preset so that, for example, a target with a predetermined height, present at a distance of 0.5 m in front of the vehicle, is displayed at a position corresponding to the distance of 0.5 m in front of the vehicle on a compressed overhead view image.

In addition, the compression ratio may be set to be different depending on a position of the vehicle periphery. If an image region of the vehicle periphery is uniformly compressed toward, for example, a center of an image region of the vehicle, image regions indicating an oblique front side and oblique rear side of the vehicle are greatly curved. For this reason, the compression ratio is set to be different depending on a position of the vehicle periphery so that the image regions indicating the oblique front side and oblique rear side of the vehicle are not greatly curved.

Here, the compressed overhead view image is directly generated from a captured image. For example, a dedicated address map is used to generate the compressed overhead view image. In the dedicated address map, a position of each pixel on a captured image is associated with a position of each pixel on a compressed overhead view image. The positions of the respective pixels of both of the images are associated with each other so that an image region of the vehicle periphery is compressed toward an image region side of the vehicle at a preset compression ratio, or a compression ratio which is set to be different depending on a position of the vehicle periphery. In addition, the compressed overhead view image is generated from the captured image and the image of the vehicle on the basis of the dedicated address map.

Further, the compressed overhead view image may be enlarged to be displayed so as to enlargedly indicate part of the vehicle periphery, and may be entirely displayed so as to indicate the entire vehicle periphery. Hereinafter, a description will be made of a case where part of the vehicle periphery is enlarged to be displayed in the compressed overhead view image so that a driver recognizes a distance to a target.

The notification control unit 22 operates the notification device 14 according to the proximity to a target present in the vehicle periphery. The notification control unit 22 outputs an operation signal to the notification device 14 when a detection result supplied from the proximity sensors 13a, 13b,... is below a distance threshold value.

The display control unit 23 controls changing of display of an overhead view image in consideration of enlarged display conditions of the overhead view image. As the enlarged display conditions of an overhead view image, an operation state of the notification device 14, a speed of the vehicle, and image capturing states of the cameras 11 a, 11b,... are considered. The display control unit 23 determines whether or not the notification device 14 is normally being operated. An operation state of the notification device 14 is determined in consideration of operation states of the proximity sensors 13a, 13b,... and an operation state of the notification control unit 22 as well. In addition, the display control unit 23 determines whether or not, for example, a speed of the vehicle is below a speed threshold value, whether or not the cameras 11 a, 11b,... properly capture images of the vehicle periphery, and the like.

In a case where the enlarged display conditions of an overhead view image are satisfied, the display control unit 23 permits enlarged display of an overhead view image. The display control unit 23 permits enlarged display of an overhead view image in a case where a driver gives an instruction for the enlarged display in a state in which all the enlarged display conditions are satisfied. On the other hand, in a case where at least some of the enlarged display conditions are not satisfied, the display control unit 23 restricts enlarged display of an overhead view image.

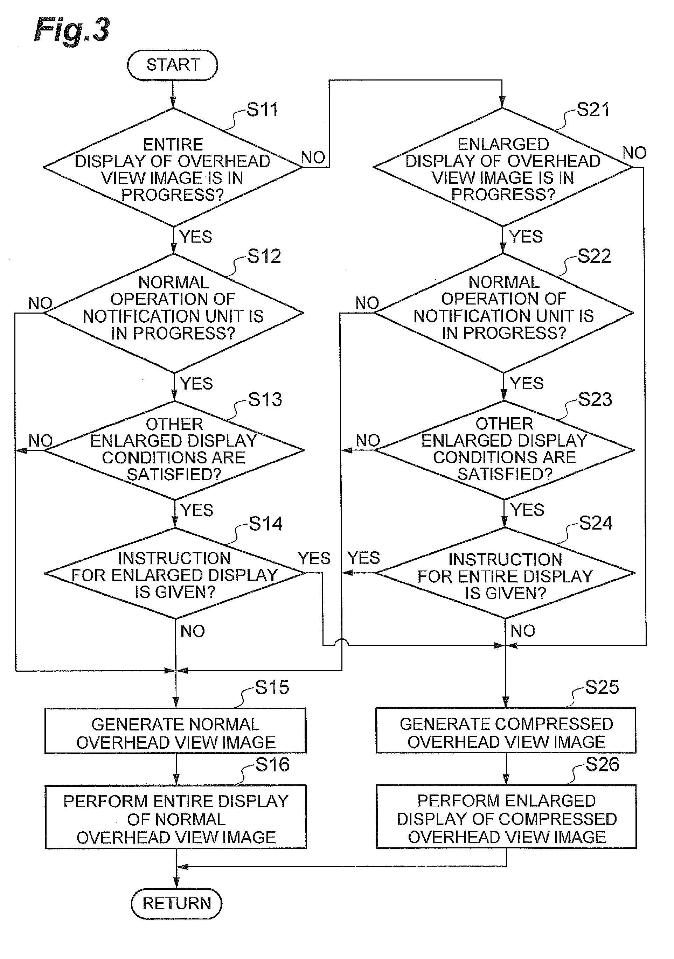

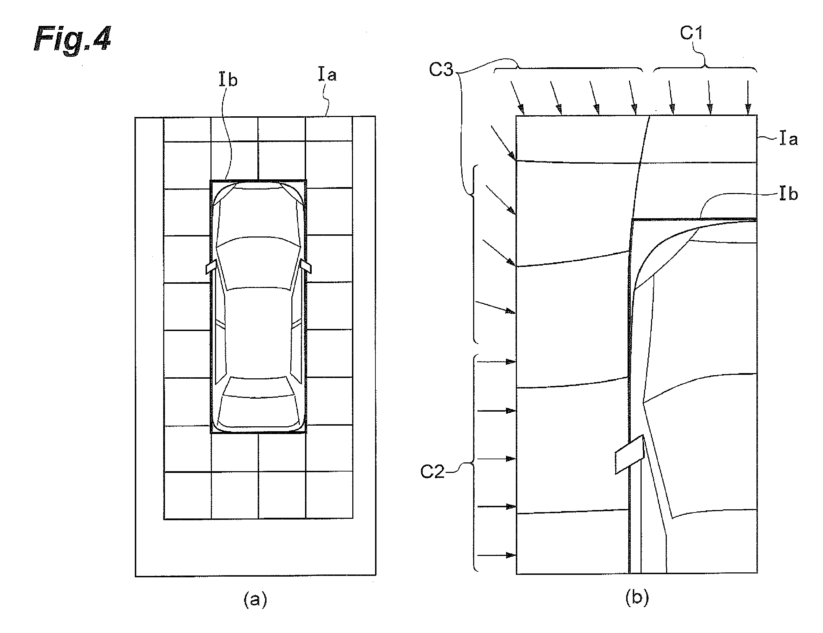

Next, with reference to Figs. 3 and 4, a description will be made of an operation of the overhead view image display device 10. Fig. 3 is a flowchart illustrating an operation of the overhead view image display device 10. Fig. 4 is a diagram comparatively illustrating an entire display example of an overhead view image and an enlarged display example of an overhead view image. In addition, Fig. 4 illustrates a case where an oblique front side of the vehicle is mainly enlargedly displayed, but a front side, a rear side, left and right sides, an oblique rear side, and the like of the vehicle may be mainly enlargedly displayed.

The overhead view image display device 10 repeatedly performs a process illustrated in Fig. 3 in a process cycle. In addition, although not illustrated in Fig. 3, in the overhead view image display device 10, an image of the vehicle periphery is captured for each process cycle.

As illustrated in Fig. 3, the display control unit 23 determines whether or not the entire display of an overhead view image is in progress (step S11). If it is determined that the entire display of the overhead view image is in progress, the display control unit 23 determines whether or not a normal operation of the notification device 14 is in progress (step S12). In addition, if it is determined that the normal operation of the notification device 14 is in progress in step S12, the display control unit 23 determines whether or not other enlarged display conditions are satisfied (step S13). Further, if it is determined that the other enlarged display conditions are satisfied in step S13, the display control unit 23 determines whether or not an instruction for enlarged display is given (step S14). Furthermore, the instruction for enlarged display is performed, for example, by touching any position on an overhead view image displayed on the display 12 with a finger or the like and designating the position.

In addition, if it is determined that the normal operation of the notification device 14 is not in progress in step S12, if it is determined that the other enlarged display conditions are not satisfied in step S13, or if it is determined that an instruction for enlarged display is not given in step S14, the display control unit 23 causes the image generation unit 21 to generate a (uncompressed) normal overhead view image on the basis of an image of the vehicle periphery captured during the process cycle (step S15), and causes the display 12 to perform entire display (step S16).

In the entire display of the overhead view image, as illustrated in Fig. 4(a), the entire vehicle periphery is displayed along with the vehicle. A lattice pattern drawn on a road surface is shown in an image region Ia of the vehicle periphery. In the entire display, the image region Ia of the vehicle periphery is not compressed toward an image region Ib side of the vehicle. For this reason, in a case where a target is present in a space separated from a ground surface of the vehicle periphery, the target is displayed to be present farther from a vehicle than actually present as described in Fig. 2. In addition, the entire display of the overhead view image is performed regardless of an operation state of the notification device 14.

Referring to Fig. 3 again, if it is determined that the normal operation of the notification device 14 is in progress in step S12, it is determined that the other enlarged display conditions are satisfied in step S 13, and it is determined that an instruction for enlarged display is given in step S14, the display control unit 23 causes the image generation unit 21 to generate a compressed overhead view image on the basis of an image of the vehicle periphery captured during the process cycle (step S25), and causes the display 12 to perform enlarged display (step S26). In addition, in the enlarged display, a corresponding image region on the compressed overhead view image is enlargedly displayed with a position, as a reference, designated when the instruction for the enlarged display is given.

In the enlarged display of the overhead view image, as illustrated in Fig. 4(b), for example, the front side, the front left side, and the left side of the vehicle are displayed along with the vehicle. In the enlarged display, the image region Ia of the vehicle periphery is compressed toward the image region Ib side of the vehicle at a preset compression ratio. Particularly, in the example illustrated in Fig. 4(b), the image region Ia of the vehicle periphery is compressed or drawn toward the image region Ib side of the vehicle. For this reason, in a case where a target is present in a space separated from the ground surface of the vehicle periphery, a positional relationship between the target and the vehicle is accurately displayed to an extent.

Here, the enlarged display of the overhead view image is permitted only in a case where the notification device 14 is normally operated. This is because, in the enlargedly displayed overhead view image (compressed overhead view image), a positional relationship between the vehicle and the target is clearly displayed, and thus a distance to the target present in the vehicle periphery is easily incorrectly recognized. If the enlarged display is permitted only in a case where the notification device 14 is normally operated, a driver can recognize a distance to the target through a notification of the proximity even if the distance to the target is completely accurately displayed on the compressed overhead view image.

In addition, in the enlarged display of the overhead view image, the image region Ia of the vehicle periphery is compressed at different compression ratios depending on positions of the vehicle periphery. The compression ratios depending on positions of the vehicle periphery can be identified from curved states of the lattice pattern shown in the image region Ia of the vehicle periphery.

In the example of Fig. 4(b), an image region indicating the front side is almost uniformly compressed backward of the vehicle as indicated by arrows C1. Consequently, for example, a position or an arrangement of a stop line which is present in front of the vehicle can be accurately displayed to an extent. In addition, an image region indicating the left side of the vehicle is almost uniformly compressed in the right direction of the vehicle as indicated by arrows C2. Consequently, for example, a position or an arrangement of a guidepath wire or an obstacle which is present on the side of the vehicle can be accurately displayed to an extent. In addition, an image region indicating the front left side of the vehicle is compressed so that the image region is not greatly curved as indicated by arrows C3. Consequently, particularly, circumstances of the oblique front side of the vehicle, in which it is hard to recognize a distance to a target, can be accurately displayed to an extent.

Referring to Fig. 3 again, if it is determined that the entire display of the overhead view image is not in progress in step S11, the display control unit 23 determines whether or not enlarged display of the overhead view image is in progress (step S21). If it is determined that the enlarged display of the overhead view image is in progress, the display control unit 23 determines whether or not a normal operation of the notification device 14 is in progress (step S22). In addition, if it is determined that the normal operation of the notification device 14 is in progress in step S22, the display control unit 23 determines whether or not other enlarged display conditions are satisfied (step S23). Further, if it is determined that the other enlarged display conditions are satisfied in step S23, the display control unit 23 determines whether or not an instruction for entire display is given (step S24). Furthermore, the instruction for entire display is performed, for example, by touching a position of a predetermined icon displayed on the display 12 with a finger or the like.

In addition, if it is determined that the normal operation of the notification device 14 is in progress in step S22, it is determined that the other enlarged display conditions are satisfied in step S23, and it is determined that an instruction for entire display is not given in step S24, the display control unit 23 causes the image generation unit 21 to generate a compressed overhead view image on the basis of an image of the vehicle periphery captured during the process cycle (step S25), and causes the display 12 to perform enlarged display (step S26).

On the other hand, if it is determined that the normal operation of the notification device 14 is not in progress in step S22, if it is determined that the other enlarged display conditions are not satisfied in step S23, or if it is determined that an instruction for entire display is given in step S24, the display control unit 23 causes the image generation unit 21 to generate a (uncompressed) normal overhead view image on the basis of an image of the vehicle periphery captured during the process cycle (step S15), and causes the display 12 to perform entire display (step S16).

As described above, according to the overhead view image display device 10 of the embodiment of the present invention, an image region of the vehicle periphery is compressed toward the vehicle side at a preset compression ratio without using position information of a target present in the vehicle periphery, and thus an overhead view image is generated. Consequently, a positional relationship between the target present in the vehicle periphery and the vehicle is accurately displayed to an extent on the generated overhead view image. Therefore, with a simple configuration without using a distance measuring sensor or the like, it is possible to display an overhead view image which allows a distance to a target to be easily recognized.

In addition, the image generation unit 21 may compress an image region of the vehicle periphery toward the vehicle side at a compression ratio which is preset depending on a height of a target present in a space separated from the ground surface, so as to generate an overhead view image. Consequently, it is possible to display an overhead view image which allows a distance to the target present in the space separated from the ground surface, to be easily recognized.

Further, the overhead view image display device 10 may further include the notification device 14 which performs a notification of the proximity to a target present in the vehicle periphery, and the display 12 may display a generated overhead view image in a case where a normal operation of the notification device 14 is in progress. Consequently, a notification of the proximity to the target present in the vehicle periphery is performed during display of the overhead view image. Therefore, a driver can recognize a distance to the target through the notification of the proximity even if the distance to the target cannot be completely accurately displayed on the overhead view image.

In addition, the image generation unit 21 may compress an image region of the vehicle periphery toward the vehicle side at different compression ratios depending on positions of the vehicle periphery, so as to generate an overhead view image. Consequently, circumstances of the vehicle periphery including a target present in the vehicle periphery are more accurately displayed.

Further, the above-described embodiment is a preferred embodiment of the overhead view image display device 10 according to the present invention, and the overhead view image display device 10 according to the present invention is not limited to one described in the present embodiment. The overhead view image display device 10 according to the present invention may be obtained by applying modifications or the like of the overhead view image display device 10 according to the present embodiment within the scope without departing from the spirit of the invention recited in the respective claims.

In addition, the present invention is also applicable to a program for displaying an overhead view image in which an image region of a vehicle periphery is compressed toward a vehicle side at a preset compression ratio without using position information of a target present in the vehicle periphery according to the above-described method, or a computer readable recording medium which stores the program.

For example, in the above-described embodiment, a description has been made of a case where a compressed overhead view image is enlargedly displayed, but the compressed overhead view image may be entirely displayed. In addition, in the above-described embodiment, a description has been made of a case where an overhead view image indicating the entire vehicle periphery is generated on the basis of captured images of the front face, the rear face, and the left and right side faces of the vehicle. However, an overhead view image may be generated as an image indicating part of the vehicle periphery, for example, on the basis of a captured image of any one of the front face, the rear face, the left side face, and the right side face of the vehicle.

### Reference Signs List

- 10: OVERHEAD VIEW IMAGE DISPLAY DEVICE
- 11a, 11b: CAMERA
- 12: DISPLAY
- 13a, 13b: PROXIMITY SENSOR
- 14: NOTIFICATION DEVICE
- 20: ECU
- 21: IMAGE GENERATION UNIT
- 22: NOTIFICATION CONTROL UNIT
- 23: DISPLAY CONTROL UNIT

## Claims

1. An overhead view image display device comprising:
an imaging unit that is mounted in a vehicle and captures an image of a vehicle periphery;
an image generation unit that converts a viewpoint of the captured image of the vehicle periphery, and compresses an image region of the vehicle periphery toward the vehicle side at a preset compression ratio without using position information of a target present in the vehicle periphery, so as to generate an overhead view image; and
a display unit that displays the generated overhead view image.

2. The overhead view image display device according to claim 1, wherein the image generation unit compresses the image region of the vehicle periphery toward the vehicle side at the compression ratio which is preset depending on a height of a target present in a space separated from a ground surface, so as to generate the overhead view image.

3. The overhead view image display device according to claim 1 or 2, further comprising:
a notification unit that performs a notification of proximity to a target present in the vehicle periphery,
wherein the display unit displays the generated overhead view image in a case where a normal operation of the notification unit is in progress.

4. The overhead view image display device according to any one of claims 1 to 3, wherein the image generation unit compresses the image region of the vehicle periphery toward the vehicle side at different compression ratios depending on positions of the vehicle periphery, so as to generate the overhead view image.
